# FASCICULE DE BREVET EUROPEEN

(11) **EP 3 823 442 B1**
(45) Date de publication et mention de la délivrance du brevet: **10.04.2024**
(21) Numéro de dépôt: 19752254.3
(22) Date de dépôt: 12.06.2019
(51) Int. Cl.: A01K 63/10, E04H 4/16, A47L 1/095, A47L 11/40, B63B 59/08

(54) **SYSTÈME DE NETTOYAGE DE PAROIS DE BASSINS AQUATIQUES**
SYSTEM ZUR REINIGUNG VON WASSERBECKEN
SYSTEM FOR CLEANING WALLS OF AQUATIC BASINS

(30) Priorité: 18.07.2018 FR 1870839
(43) Date de publication de la demande: 26.05.2021
(73) Titulaire: Abyssnaut, 63880 Olliergues (FR)
(72) Inventeur: BERENGUER, Jérôme, 63880 Olliergues (FR)
(74) Mandataire: Gabriel, Franck
(86) Numéro de dépôt international: PCT/IB2019/054905
(87) Numéro de publication internationale: WO 2020/016674

(56) Documents cités:
- CN-A- 106 725 141
- FR-A1- 3 033 229
- JP-U- 3 155 630

## Description

### DOMAINE TECHNIQUE DE L'INVENTION

La présente invention concerne un système de traitement de parois de bassins aquatiques. Elle concerne plus particulièrement un système de traitement de parois internes de bassins aquatiques comportant au moins une tête de travail, un ensemble de mobilité permettant de déplacer la tête de travail le long d'une paroi à traiter, la tête de travail comprenant un disque de travail rotatif.

### ETAT DE LA TECHNIQUE ANTERIEURE

Les bassins aquatiques tels que les aquariums sont destinés à être observés par le public et doivent par conséquent comporter des parois propres avec une haute qualité de transparence. Un nettoyage des surfaces transparentes des bassins aquatiques doit donc être régulièrement effectué. La plupart des bassins comportent plusieurs variétés de poissons et végétaux marins, souvent source de diverses salissures et entrainant le dépôt de biofilms le long des parois du bassin. Les biofilms peuvent facilement entraver la visibilité d'un aquarium au bout de seulement quelques jours. Les travaux de nettoyage des parois doivent donc être répétés à intervalles réguliers pour éviter que le biofilm ne devienne trop épais et difficile à retirer.

Différents procédés de l'art antérieur permettent d'effectuer le nettoyage des surfaces transparentes des aquariums. Souvent, les procédés connus nécessitent non seulement des moyens intrusifs néfastes envers les formes de vie présentes dans les bassins aquatiques, mais également une intervention humaine lourde et non aisément mise en oeuvre.

De manière générale, le nettoyage de surfaces transparentes de bassins aquatiques est effectué artisanalement. Les grands bassins sont souvent nettoyés par des opérateurs placés sur des surfaces disponibles au-dessus du bassin. Ils utilisent des perches munies de brosses ou éponges pour frotter les parois. Les déplacements effectués sont irréguliers et certaines zones peuvent être oubliées. La qualité du nettoyage est souvent approximative du fait de l'application d'une force de frottement non constante et d'un nombre de passages aléatoire.

D'autres modes de nettoyage sont également connus. On connaît par exemple des systèmes comportant un élément interne au bassin et un élément externe au bassin, les deux éléments coopérant ensemble grâce à un effet magnétique. Un opérateur, placé hors du bassin, peut alors déplacer l'élément externe, entrainant de ce fait l'élément interne.

Par exemple, la demande de brevet EP2012581 propose un dispositif de nettoyage de vitres d'aquarium, et notamment de vitres internes d'aquarium. Ce dispositif comporte un élément qui peut être positionné sur la paroi interne de la vitre d'aquarium. Le dispositif comprend également un élément externe qui est positionné sur la face externe de la paroi. Les éléments internes et externes du dispositif sont respectivement attirés par la force magnétique de façon à ce que l'élément interne du dispositif suive les mouvements de l'élément externe. Une surface de nettoyage est installée au sein du dispositif. Cette surface est tournée directement contre la paroi interne de l'aquarium. Ce dispositif facilite le nettoyage des parois de petites dimensions. Pour les grandes parois, souvent hautes, l'opérateur est contraint d'utiliser divers moyens pour pouvoir parcourir l'ensemble de la surface.

Le document EP1947932 concerne également un dispositif de nettoyage d'aquarium disposant d'un composant interne qui comporte une plaque servant de surface de nettoyage, ainsi qu'un composant de nettoyage alternativement opératif, situé sur une surface opposée à la surface à nettoyer. Un élément magnétique est placé sur la plaque et un moyen de flottaison figure à une extrémité de la plaque. Un composant extérieur comporte un corps se fixant à la surface extérieure d'une paroi de l'aquarium. Un second élément magnétique est porté par le corps, de telle sorte que le corps peut être positionné entre les deux éléments magnétiques avec la surface de nettoyage adjacente à la paroi d'aquarium. En déplaçant le corps entre les premières et secondes positions, le composant interne est déplacé à l'intérieur de l'aquarium afin de nettoyer les différentes surfaces.

Egalement, la demande WO2008006259 décrit un nettoyeur magnétique de vitres d'aquarium comprenant un élément de nettoyage intérieur destiné à glisser sur la surface intérieure de la vitre. Cet élément nettoyeur intérieur comprend un couvercle frontal, un couvercle dorsal, un aimant, ainsi qu'une surface de nettoyage. Le dispositif comprend également un élément nettoyeur extérieur positionné sur la surface extérieure de la vitre. La force magnétique entre les éléments nettoyeurs intérieurs et extérieurs permet d'entrainer le mouvement de l'élément de nettoyage intérieur par déplacement de l'élément de nettoyage extérieur.

La demande EP1738642 concerne un dispositif de nettoyage de surface interne d'un aquarium comportant un corps intérieur. Le corps intérieur comporte une surface de nettoyage composée de mousse, destinée à être en contact avec la paroi à nettoyer. Le corps intérieur est déplacé sur la surface magnétique grâce à la force magnétique le liant à un composant extérieur.

Le document WO2007127472 constitue encore un autre exemple de traitement et propose un mécanisme de préparation de surface à distance, telle que le nettoyage de la surface intérieure d'un aquarium géré de l'extérieur. Le dispositif de nettoyage comprend un corps doté d'au moins un élément magnétique qui est couplé, pour la commande à distance, avec des éléments magnétiques complémentaires, dans une tête d'entraînement mobile située à distance.

Enfin, le document WO0040080 décrit un dispositif de nettoyage de vitres d'aquariums, notamment de l'intérieur des vitres d'aquarium. Le dispositif comprend un élément intérieur, placé sur la paroi intérieure de la vitre, et un élément extérieur placé sur le côté extérieur de la vitre de l'aquarium. Ces éléments intérieurs et extérieurs s'attirent mutuellement sous l'effet d'une force magnétique, de sorte que le mouvement de l'élément extérieur le long de la vitre de l'aquarium provoque le même mouvement de l'élément intérieur. Le dispositif se caractérise en ce que l'élément placé à l'intérieur de l'aquarium est conçu pour flotter sur le milieu liquide contenu dans l'aquarium lorsque la force magnétique ne s'applique plus.

Le document FR2335269 décrit un dispositif pouvant adhérer à la surface d'une paroi en faisant ventouse et se déplacer le long de celle-ci de façon à effectuer différents travaux tels que le nettoyage ou la peinture de surfaces de parois.

Le document FR3033229 décrit un système de traitement par polissage de parois internes de bassins aquatiques comportant un réservoir de mélange abrasif et une tête de traitement de surface en communication fluidique avec le réservoir de mélange abrasif, et des moyens permettant d'alimenter la tête de traitement avec un flux continu de mélange abrasif. La tête de traitement comporte par ailleurs une hélice de poussée, prévue à l'opposée de la chambre de confinement.

L'état de la technique, tel qu'illustré par les documents préalablement cités, propose des systèmes permettant de polir et/ou nettoyer des surfaces d'aquariums grâce à différents mécanismes magnétiques. De tels procédés présentent cependant certains inconvénients. La force magnétique nécessaire au traitement de surface implique d'installer deux éléments de part et d'autre de la paroi du bassin aquatique à traiter. Ce système oblige de plus à disposer d'un accès extérieur aisé quel que soit l'agencement des parois à nettoyer, ce qui n'est pas toujours le cas en pratique. La technique de traitement, notamment par mécanismes magnétiques, est bien souvent limitée à des parois relativement minces, ce qui exclut le traitement de grands bassins aquatiques, dont les parois peuvent atteindre plusieurs dizaines de centimètres d'épaisseur. Egalement, la mise en mouvement de l'élément magnétique fixé sur la paroi interne du bassin aquatique est engendrée par la mise en mouvement de l'élément externe, souvent par intervention humaine, excluant l'automatisation du procédé. Ces différents systèmes ne permettent pas de régler ou varier l'intensité de la force appliquée sur la face nettoyante. Enfin, la face nettoyante à l'intérieur du bassin est rapidement saturée de salissures et biofilm, diminuant considérablement la qualité du nettoyage.

On connaît également des systèmes automatiques, comme par exemple tel que celui de la demande WO2006078921, qui décrit un système de nettoyage automatique pour aquarium. Le système de nettoyage est programmé pour effectuer le nettoyage d'un aquarium sur une base régulière sans nécessiter une intervention humaine durant le procédé de nettoyage. Le système de nettoyage est configuré pour se mouvoir le long des parois latérales de l'aquarium afin de nettoyer lesdites parois lors de son déplacement. Un tel système est prévu pour des petits aquariums et des bassins de faibles volumes. Son action est restreinte au nettoyage des parois.

Pour pallier ces différents inconvénients, l'invention prévoit différents moyens techniques.

### EXPOSE DE L'INVENTION

Tout d'abord, un premier objectif de l'invention consiste à prévoir un système de traitement, en particulier de nettoyage de parois de bassins aquatiques permettant un nettoyage de haute qualité optique des surfaces transparentes, sans nuire à l'environnement des êtres vivants dans le bassin et sans détériorer les parois à traiter.

Encore un objectif de l'invention vise à prévoir un dispositif permettant de travailler en flux continu, sans engendrer de difficultés quant au dosage d'effort à appliquer.

Enfin un autre objectif de l'invention vise à permettre de traiter différentes configurations de parois de bassins aquatiques.

Pour ce faire, l'invention définie par la revendication 1 prévoit un système de traitement de parois internes de bassins aquatiques comportant au moins une tête ventouse dynamique, un ensemble de mobilité permettant de déplacer la tête ventouse dynamique le long d'une paroi à traiter, la tête ventouse dynamique comprenant un disque rotatif agencé de façon rotative et relié à un axe de rotation susceptible d'être entraîné par un moteur de disque, le disque rotatif portant une couche d'interface de paroi, caractérisé en ce que la couche d'interface de paroi comprend une pluralité de rainures radiales reliant le centre de rotation du disque à la périphérie du disque et au moins un orifice assurant, en fonctionnement dans un bassin aquatique à proximité immédiate d'une paroi à traiter, un flux d'eau entre l'arrière du disque et les rainures radiales agencés dans la portion du disque située du côté de la paroi à traiter.

Le système permet le nettoyage et l'élimination du biofilm présent sur les parois immergées des aquariums ou toute paroi de bassins aquatiques. Lorsque le disque rotatif est entrainé en rotation, et que celui-ci se trouve à une faible distance de la paroi à traiter, une aspiration est créée, entrainant le plaquage de la tête contre la paroi. Une circulation d'eau est réalisée. L'eau circule dans les rainures du disque de travail et est éjectée latéralement puis rejetée dans l'eau du bassin. Ainsi, l'eau circule dans la mousse de frottement du disque, assurant son rinçage et emportant avec elle le biofilm et autres salissures retirées de la paroi. Par ailleurs, plus le disque de travail tourne rapidement, plus l'aspiration et le frottement sur la paroi sont importants. Un tel agencement permet ainsi de placer et maintenir une tête de travail contre une paroi à traiter sans opérateur ou encore sans l'aide d'une hélice de propulsion placée à l'opposée du disque. L'effet hydrodynamique engendré par la rotation des rainures permet de réaliser une fonction ventouse. Un tel agencement permet de traiter des parois de grande surface de façon automatique ou semi-automatique sans intervention humaine dans le bassin.

Selon un mode de réalisation, le ou les orifices sont disposés sur le pourtour de l'axe de rotation. En variante, l'axe de rotation comporte un orifice traversant. Ces orifices permettent d'assurer une circulation fluidique depuis l'eau du bassin vers la mousse de frottement et plus particulièrement les rainures radiales. La circulation d'eau permet de pérenniser l'action nettoyante de la mousse grâce à un effet autonettoyant de cette dernière.

Selon un mode de réalisation avantageux, la tête de travail comprend une enveloppe périphérique axiale.

L'enveloppe périphérique axiale comporte avantageusement une paroi latérale circonférentielle, agencée de façon à entourer le disque de travail. De cette façon, l'enveloppe périphérique permet de confiner l'action de la mousse rotative tout en minimisant les nuisances hydrodynamiques, par exemple pour faire en sorte que le sable ou des impuretés aux alentours de la paroi ne soient pas entrainés dans la mousse.

Une variante avantageuse prévoit qu'une lumière d'évacuation est agencée à travers la paroi latérale de l'enveloppe périphérique axiale. Cette lumière permet la circulation du flux d'eau vers l'extérieur de l'enveloppe périphérique, entraînant les impuretés et salissures à l'extérieur de l'enveloppe.

Selon un mode de réalisation avantageux, la couche d'interface comporte une surface de traitement et la tête ventouse dynamique sert d'une part à fixer le système de traitement à une paroi de bassin à traiter et d'autre part à effectuer un traitement de nettoyage ou de polissage de la paroi à l'aide de ladite surface de traitement.

Selon un autre mode de réalisation, la tête ventouse dynamique sert uniquement à fixer le système de traitement à une paroi de bassin à traiter. Le système prévoit alors de préférence au moins une tête de traitement de paroi, distincte de la tête ventouse dynamique, conçue pour effectuer un traitement de polissage ou de nettoyage d'au moins une paroi du bassin.

Dans un exemple de réalisation, l'ensemble de mobilité permettant de déplacer la tête ventouse dynamique le long de la paroi à traiter comporte au moins un rail vertical et/ou un rail horizontal.

Dans un autre type de mise en oeuvre, l'ensemble de mobilité permettant de déplacer la tête ventouse dynamique le long de la paroi à traiter comporte une plate-forme flottante à laquelle la tête de traitement est reliée.

Dans encore un autre exemple, l'ensemble de mobilité permettant de déplacer la tête ventouse dynamique le long de la paroi à traiter comporte au moins un galet motorisé.

De manière avantageuse, la tête ventouse dynamique comprend un couvercle pourvu d'orifices.

Selon encore un mode de réalisation avantageux, les parois des rainures comportent des lèvres se prolongeant au-delà de la surface de la couche d'interface.

De manière avantageuse, le disque de travail coopère avec l'enveloppe périphérique axiale par l'entremise d'au moins un ressort. L'enveloppe périphérique est ainsi mobile axialement par rapport au disque de travail. L'enveloppe périphérique coulissante axialement, maintenue contre la paroi à traiter par un ou plusieurs ressorts, permet de découpler l'effort exercé par l'enveloppe périphérique de celui exercé par le disque de travail. On prévoit par exemple un ressort de faible caractéristique de raideur afin de faire en sorte que l'enveloppe périphérique exerce un appui modéré contre la paroi. Par appui modéré, on entend une force d'appui permettant le maintien de l'enveloppe périphérique contre la paroi, tout en permettant à celle-ci et à l'ensemble de la tête de travail de glisser contre la paroi, pour permettre de nettoyer l'ensemble de la surface immergée de la paroi.

Selon un mode de réalisation avantageux, l'ensemble de mobilité permettant de déplacer la tête de traitement le long de la paroi à traiter comporte au moins un rail vertical et/ou un rail horizontal. Cet agencement constitue une mise en oeuvre simple, peu coûteuse et facile à monter/démonter. Selon une variante avantageuse, le système de traitement comporte au moins un rail monté mobile.

Dans une variante, l'ensemble de mobilité permettant de déplacer la tête de travail le long de la paroi à traiter comporte une plate-forme flottante à laquelle la tête de traitement est reliée.

### DESCRIPTION DES FIGURES

Tous les détails de réalisation sont donnés dans la description qui suit, complétée par les figures 1 à 12, présentées uniquement à des fins d'exemples non limitatifs, et dans lesquelles:
- la figure 1 est une vue de face depuis l'extérieur d'un bassin aquatique d'un exemple de disque de travail;
- la figure 2 est une vue de face d'une variante de réalisation du disque de travail de la figure 1 ;
- la figure 3 est une représentation schématique d'un exemple de réalisation d'une tête de traitement;
- la figure 4 est une représentation schématique d'un autre exemple de réalisation d'une tête de traitement;
- la figure 5 est une représentation schématique d'un exemple de réalisation d'un système de traitement de paroi utilisant des rails et des têtes de maintien;
- la figure 6 est une représentation schématique d'un exemple de réalisation d'un système de traitement de paroi utilisant des rails et têtes ventouses dynamiques;
- la figure 7 est une représentation schématique d'un exemple de réalisation d'un système de traitement de paroi utilisant une plate-forme flottante ;
- la figure 8 est une représentation schématique en vue de face d'un exemple de plate-forme flottante portant une tête de travail ;
- la figure 9 est une représentation schématique en vue de côté de la plate-forme flottante de la figure 8;
- la figure 10 est une représentation schématique en vue de dessus de la plate-forme flottante de la figure 8 ;
- la figure 11 est une représentation schématique d'un exemple de réalisation d'un système de traitement, en particulier de nettoyage de paroi, utilisant un ensemble de mobilité avec galets;
- la figure 12 est une représentation schématique d'un exemple de réalisation d'un système de traitement, en particulier de polissage de paroi, utilisant un ensemble de mobilité avec galets.

### DESCRIPTION DETAILLEE DE L'INVENTION

### DISQUE ROTATIF ET EFFET D'ASPIRATION

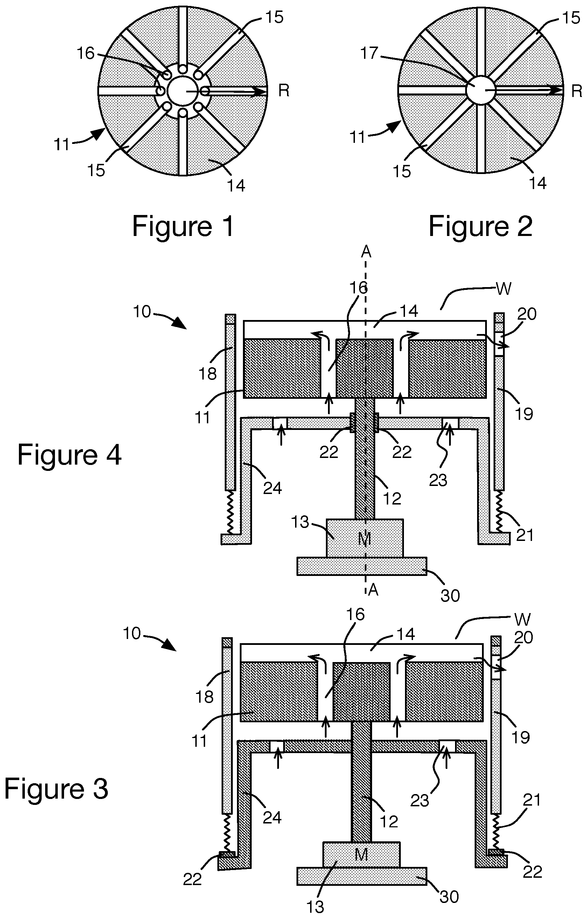

Les figures 1 et 2 illustrent des exemples de réalisation de disques 11 rotatifs vus depuis la face susceptible d'être en contact avec la paroi du bassin à traiter. On observe que le disque 11, de rayon R, comprend une pluralité de rainures 15 ou cannelures radiales, c'est-à-dire orientées dans la direction du rayon R. Les rainures sont orientées radialement depuis le centre de rotation du disque. Dans l'exemple de réalisation de la figure 1, une pluralité d'orifices 16 sont agencés autour de l'axe de rotation. Chacun des orifices 16 communique avec une rainure 15. Dans l'exemple de réalisation de la figure 2, un orifice unique 17 est agencé centralement dans l'axe de rotation 12 reliant le disque 11 à un moteur 13 visible aux figures 3 et 4. L'orifice central 17 communique avec chacune des rainures 15. Du fait de cet ou de ces orifices 16 ou 17 et des rainures 15, lors de la mise en rotation du disque à proximité immédiate d'une paroi à traiter en milieu aquatique, un flux d'eau est généré entre l'arrière et l'avant du disque, soit depuis l'arrière du disque 11, puis traversant le disque et s'acheminant par les rainures 15 radiales agencées dans la portion du disque située du côté de la paroi. Ce flux hydrodynamique engendre un effet de ventouse ou d'aspiration qui tend à plaquer le disque contre la paroi. Le niveau de l'effet d'aspiration est ajustable en fonction du nombre et des dimensions des rainures, du diamètre du disque, du matériau utilisé, et surtout de la vitesse de rotation du disque. Cet effet ventouse permet aux disques de remplir diverses fonctions hydromécaniques, tel qu'expliqué dans ce qui suit.

### TETE VENTOUSE MONO OU DOUBLE FONCTION

Les figures 3 et 4 illustrent, en coupe, des exemples de tête ventouse dynamique 10 portant un disque tel que celui illustré à la figure 1 ou 2. Tel qu'illustré, le disque 11 comporte une couche d'interface 14 de paroi, du côté du disque prévu pour interfacer, avec ou sans contact, avec la paroi 3 à traiter. La couche d'interface 14 est soit séparée du disque 11, soit intégrale ou venue de matière avec le disque. Le disque 11 est réalisé dans un matériau rigide et de préférence non poreux, comme par exemple en aluminium. Les rainures 15 et les orifices 16 et 17 sont avantageusement réalisés dans la masse du disque 11,

En fonction des modes de réalisation, la tête ventouse dynamique met en oeuvre une seule ou deux fonctions Elle peut en effet générer une fonction ventouse, tel que préalablement décrit. Elle peut également générer un effet ventouse couplé à un effet de traitement de paroi, par exemple de nettoyage ou de polissage.

Pour le mode duo, la couche d'interface 14 comprend une surface de traitement réalisée en matériau permettant d'effectuer un travail de nettoyage d'une paroi de bassin aquatique, souvent en PMMA, sans toutefois risquer d'abîmer cette dernière. La surface de traitement peut être réalisée par exemple : en polyuréthane ou en polyéthylène avec des duretés et des densités variables ainsi que des dimensions d'alvéoles (ouvertes ou fermées) et des porosités variables selon les objectifs du traitement.

Pour le mode duo, une variante peut prévoir une couche interface constituée de lèvres plus ou moins souples, disposées dans le prolongement des parois des rainures 15, réalisées directement dans la masse du disque 11 ou dans celle de la couche d'interface 14. Nous parlons ici des parois des rainures 15 perpendiculaire à la paroi à traiter 3. Ces lèvres dépassent en hauteur de plusieurs millimètres de la surface du disque 11 ou de la couche d'interface 14. Elles peuvent représenter une longueur plus ou moins égale au rayon R du disque 11.et être simples ou doubles. En effet la présence de ces lèvres, installées dans les rainures 15, bénéficient du flux d'eau dans ces dernières pour évacuer le bio film arraché à la paroi lors de la rotation du disque 11. Ainsi, dans ce mode à double fonction, la couche d'interface 14 est en contact avec la paroi à traiter.

Pour le mode mono fonction avec un simple effet de maintien, le disque 11 se trouve de préférence légèrement à distance de la paroi, par exemple de quelques millimètres, pour assurer l'effet hydrodynamique, tout en évitant le contact avec la paroi.

Un moteur 13 et un axe 12 orienté selon l'axe A-A, prévus au niveau de la tête ventouse, permettent une mise en rotation du disque rotatif 11. Lorsque le disque est immergé et se situe à une faible distance (par exemple 1 à 2 cm pour un disque d'un diamètre de 100 mm) d'une paroi à traiter, la rotation du disque cannelé produit une dépression qui tend à rapprocher le disque de travail de la paroi 3, cette dernière étant fixe. La tête ventouse 10 est agencée pour pouvoir se rapprocher de la paroi grâce à cet effet. Pour un disque du diamètre tel qu'évoqué précédemment, la vitesse de rotation permettant de produire l'effet hydrodynamique tendant à plaquer le disque contre la paroi à traiter est par exemple comprise entre 800 à 1200 tours/min (à titre d'exemple uniquement).

Les flèches des figures 3 et 4 illustrent un exemple de flux d'eau lorsqu'une tête ventouse est en place, contre une paroi d'un bassin aquatique. L'eau provient de l'arrière du disque de travail, passe par les orifices 16 ou 17 et communique ensuite avec les rainures radiales 15. Une fois le disque en place, le flux d'eau se poursuit de façon continue tant que la rotation du disque est maintenue. En plus de contribuer à l'effet ventouse, ce flux permet d'assurer un nettoyage de la surface de traitement pour éviter que le biofilm et autres salissures retirées lors du nettoyage de la paroi s'accumulent sur le disque et saturent la surface de traitement, empêchant le traitement de nettoyage de se poursuivre. Dans ce mode de réalisation à double fonction, le disque ventouse est en contact direct avec la paroi à traiter. Il agit par frottement contre celle-ci pour effectuer une action de nettoyage.

La tête ventouse 10 comprend de préférence une enveloppe périphérique 18 agencée de façon coaxiale avec l'axe de rotation 12. Cette enveloppe comporte une paroi latérale circonférentielle 19 agencée de façon à entourer le disque rotatif 11. Dans les exemples des figures 3 et 4, l'enveloppe se prolonge vers l'arrière des disques rotatifs pour entourer une portion de l'arbre 12. L'enveloppe permet de délimiter une zone de travail W à l'intérieur de laquelle le disque effectue une action de nettoyage contre la paroi à traiter. Cette zone de travail W est également délimitée à l'arrière du disque 11 par un couvercle 24, refermant l'enveloppe 18. Dans les exemples illustrés, le couvercle 24 est en forme de U inversé, avec une ouverture centrale pour laisser passer l'arbre 12 du moteur. Des orifices complémentaires 23, prévus dans le couvercle 24, assurent une communication fluidique entre la zone de travail W et la zone du moteur M. Le couvercle 24 peut également être plat ou en forme de U non inversé.

Une lumière 20 d'évacuation est agencée à travers la paroi latérale 19 de l'enveloppe périphérique 18 axiale. Ce tunnel permet au flux d'eau de quitter l'enveloppe pour aller rejoindre le bassin. Le tunnel est avantageusement positionné de telle sorte à se trouver dans la zone supérieure de la tête ventouse 10 lors des phases de nettoyage. On évite ainsi que le flux d'eau sortant agisse contre le sol du bassin, ce qui risquerait de repousser des cailloux ou particules ou salissures vers la tête de travail. Si jamais un corps étranger dur et/ou abrasif se retrouvait entre le disque de travail et la paroi à traiter, il y aurait alors d'importants risques de causer des rayures ou autres dommages à la paroi. L'enveloppe périphérique 18 procure une protection additionnelle contre l'arrivée de tels contaminants dans la zone de travail W. Un élément ou système de filtration peut être connecté sur cette lumière d'évacuation 20.

Pour éviter que l'enveloppe périphérique 18 exerce une force trop importante contre la paroi 3, le disque rotatif 11 coopère avec cette dernière par l'entremise d'au moins un ressort 21. On utilise par exemple un ressort périphérique agencé axialement dans le prolongement de l'extrémité de l'enveloppe périphérique 18 opposée à la zone de travail W. Le ressort 21 agit d'une part sur l'enveloppe 18 et d'autre part sur le couvercle 24.

Contrairement à l'ensemble formé par le disque 11 et la couche d'interface, l'enveloppe périphérique 18 est conçue pour rester angulairement fixe, sans rotation, en regard de la paroi à traiter. Un joint circonférentiel ou un matériau d'une dureté inférieure à la paroi à traiter est avantageusement prévu à l'extrémité de contact de l'enveloppe périphérique 18. Ce joint ou ce matériau permet un contact doux avec la paroi, sans risque de l'endommager. La liaison entre la partie angulairement fixe de la tête et la partie rotative de la tête est assurée par un palier 22, comme par exemple un palier lisse ou à roulement. Les figures 3 et 4 illustrent deux modes de réalisation d'une tête ventouse 10. Dans le mode de réalisation de la figure 3, les parties pouvant être mises en rotation comprennent l'arbre 12, le disque 11, la couche d'interface 14 et le couvercle 24. Le palier 22 est agencé entre le couvercle et le ressort 21. Dans le mode de réalisation de la figure 4, les parties pouvant être mises en rotation comprennent uniquement l'arbre 12, le disque 11 et la couche d'interface 14. Le palier 22 est dans ce cas agencé entre l'arbre 12 et le couvercle 24.

### VARIANTE AVEC TETES MULTIPLES

En variante, le système de traitement de parois prévoit deux têtes ventouses ou plus, montées en groupe. Par exemple, pour deux têtes ventouses, celles-ci sont fixées l'une à l'autre en côte à côte ou l'une sur l'autre. Les motorisations et les disques sont de préférence prévus pour rotation en sens inverse afin de compenser l'effet de couple qui tend à faire tourner une tête unique en sens inverse du moteur d'actionnement du disque. De façon similaire, on peut prévoir un ensemble avec quatre têtes ventouses montées en deux paires de deux telles que préalablement décrites, de façon à former un carré. D'autres agencements avec différents nombres pairs ou impairs de têtes sont également possibles.

### ENSEMBLE DE MOBILITE

Pour la mise en oeuvre des opérations de nettoyage de parois de bassins, la tête ventouse 10 coopère avec un ensemble de mobilité 30. Dans ce qui suit, divers exemples d'ensembles de mobilité sont présentés.

### ENSEMBLE DE MOBILITE AVEC RAILS

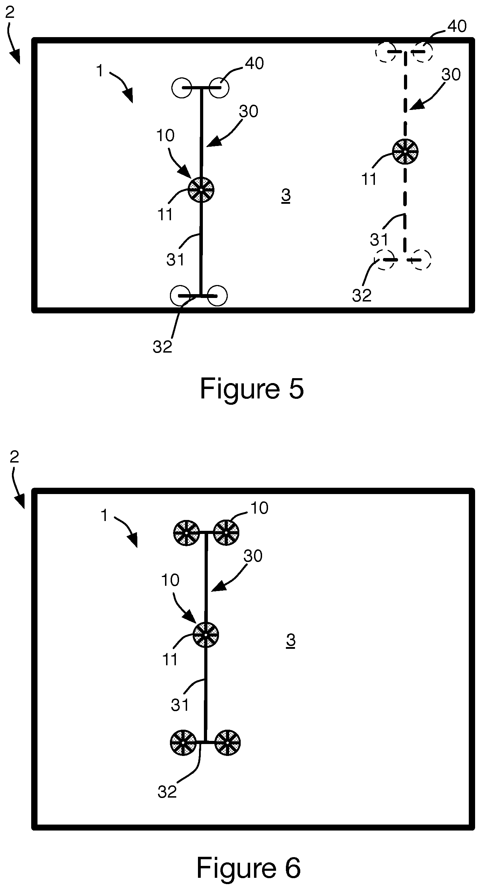

La figure 5 illustre un premier exemple d'un ensemble de mobilité 30 comportant un rail vertical 31 permettant le déplacement de la tête ventouse dans le sens vertical et un rail horizontal 32. Selon ce premier exemple de réalisation, l'ensemble de mobilité comporte différents éléments permettant d'assurer le support et la mobilité de la tête ventouse 10. Tel qu'illustré, l'ensemble de mobilité 30 comporte un rail vertical 31 et deux rails horizontaux 32 agencés aux extrémités du rail vertical. Le rail vertical 31 est conçu afin de permettre la mobilité de la tête ventouse 10 en effectuant des mouvements de translation selon l'axe Y. Le déplacement en translation de la tête ventouse 10 selon l'axe Y est assuré par exemple par un moteur de déplacement vertical prévu dans la tête ventouse 10. Pour faciliter la translation, des galets sont avantageusement agencés entre la tête ventouse10 et le rail vertical 31. Le rail vertical 31 est lui-même monté mobile le long de l'axe X. La mobilité du rail vertical 31 sur l'axe X est permise par exemple par un ou deux moteurs de déplacement horizontal. Grâce à ces deux types de déplacements, une tête ventouse à double fonction peut être déplacée sur toute la surface couverte par l'envergure des rails 31 et 32.

La fixation de l'ensemble de mobilité à la paroi à nettoyer est assurée au moyen de ventouses fixes (non rotatives) 40, par exemple disposées aux extrémités des rails horizontaux. Ces ventouses fixes sont avantageusement reliées à un système d'aspiration, situé par exemple à l'extérieur du bassin à traiter, et permettant de générer l'aspiration nécessaire pour permettre la fixation des ventouses.

Dans une variante avantageuse, illustrée à la figure 6, les ventouses fixes sont remplacées par des têtes ventouses dynamiques 10. Tel qu'expliqué précédemment, les têtes ventouses sont conçues pour produire un effet hydrodynamique tendant à aspirer les disques de travail contre la paroi à traiter. Cet effet est avantageusement utilisé pour fixer l'ensemble de mobilité 30 à la paroi. Ce mode de réalisation permet d'éviter l'utilisation des tubes d'aspiration reliant la pompe à vide aux différentes ventouses de l'exemple précédent. Les têtes ventouses 10 sont simplement reliées électriquement à un boîtier de commande prévu pour positionnement hors du bassin, par exemple au dessus de ce dernier, dans une zone d'intervention servant à l'entretien du bassin et aux soins à donner à la faune marine installée dans le bassin.

### ENSEMBLE DE MOBILITE AVEC PLATE-FORME FLOTTANTE

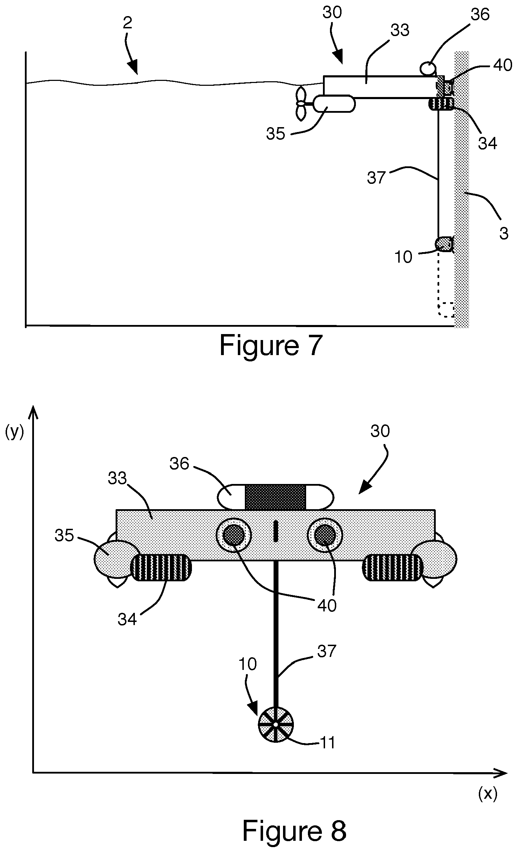

Les figures 7 à 10 illustrent un deuxième exemple d'ensemble de mobilité 30, de type comportant une plate-forme flottante 33 à laquelle une tête ventouse 10 à double fonction est reliée. Un treuil 36 porte un câble 37 auquel une tête ventouse est attachée. Le câble permet de déplacer la tête ventouse verticalement le long de la paroi 3 à nettoyer. Les déplacements latéraux de la plate-forme flottante 33 et par conséquent de la tête ventouse 10 sont effectués grâce à des galets motorisés 34 en appui contre la paroi, bien visibles aux figures 8, 9 et 10. Un moteur à hélice 35 permet de propulser la plate-forme dans le bassin, et d'assurer l'approche jusqu'à la paroi à traiter. Une fois à proximité de la paroi, une ou plusieurs tête de maintien 40, ou en variante, des têtes ventouses, assurent le maintien de la plate-forme contre la paroi, par effet ventouse, tel que préalablement décrit.

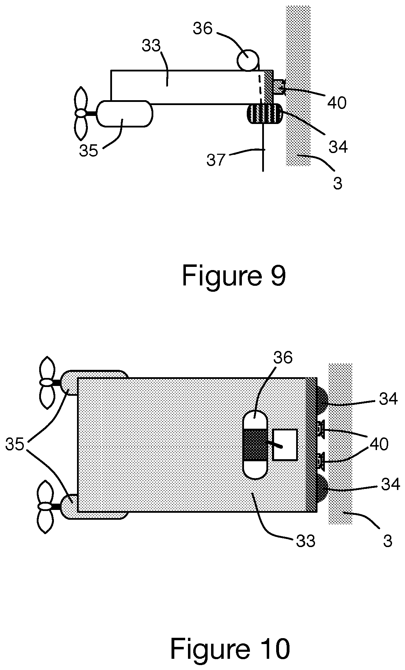

En variante, le coulissement de l'enveloppe périphérique 18 par rapport au couvercle 24 est supprimé ou réduit, améliorant d'autant l'effet hydrodynamique et la force de maintien résultante. Pour ce faire on utilise un ou des ressorts avec des caractéristiques de raideurs plus importantes ou on supprime le ou les ressorts 21. De préférence, la rotation de ces éléments se fait sans contact avec la paroi à traiter 3, à quelques millimètres de celle-ci, grâce à un réglage optimum de mise en butée de l'enveloppe périphérique 18. Aux figures 7 et 8, la tête de maintien 40 est en appui contre la paroi 3. À la figure 10, les deux têtes de maintien 40 sont en retrait de la paroi 3.

### ENSEMBLE DE MOBILITE AVEC GALETS

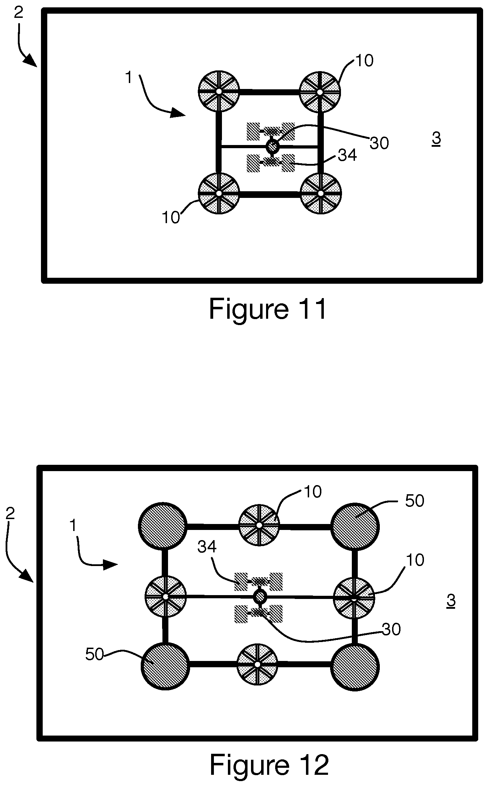

La figure 11 est une représentation schématique d'un exemple de réalisation d'un système de traitement par nettoyage de paroi. Un ensemble de quatre tête ventouses dynamiques 10 à double fonction permettent d'une part de fixer le système 1 à la paroi 3 à nettoyer et d'autre part d'effectuer le nettoyage de la paroi au moyen d'une action mécanique de frottement non abrasif, par exemple à l'aide de la couche d'interface 14 de paroi qui est spécifiquement adaptée à effectuer cette fonction de nettoyage, tel que préalablement décrit en relation avec les figures 3 et 4. Dans l'exemple illustré, les têtes dynamiques 10 sont prévues aux quatre coins du système de traitement afin de faciliter l'accès aux bords et aux coins des parois à traiter. D'autres types de configurations peuvent être prévues. L'ensemble de mobilité 30 comprend une pluralité de galets 34 disposés de façon à contacter la paroi pour rouler sur cette dernière. Les galets sont ici montés deux par deux, espacés par un moteur électrique central, l'ensemble étant commandé à distance par une télécommande adaptée. L'action des galets roulants contre la paroi permet de déplacer le système de traitement. La puissance d'aspiration des têtes ventouses dynamiques est dosée et adaptée de façon à permettre à la fois une force de fixation contre la paroi, tout en permettant le déplacement le long de celle-ci par l'action des galets. Le chariot porteur des galets peut pivoter, par exemple en désynchronisant les vitesses de rotation des roues de chaque côté, permettant ainsi de déplacer le système de traitement dans toutes les directions utiles.

La figure 12 est une représentation schématique d'un exemple de réalisation d'un système de traitement par polissage de paroi. Un ensemble de quatre têtes ventouses dynamiques 10 à simple effet permettent de fixer le système 1 à la paroi 3 à nettoyer. Quatre tête de travail 50 adaptées pour des tâches de polissage sont prévues aux quatre coins du dispositif afin d'effectuer le polissage de la paroi au moyen d'une action mécanique de frottement légèrement abrasif de type connu.

Dans l'exemple illustré, les têtes indépendantes 50 sont prévues aux quatre coins du système de traitement afin de faciliter l'accès aux bords et aux coins des parois à traiter. D'autres types de configurations peuvent être prévues. L'ensemble de mobilité 30 comprend une pluralité de galets 34 tels que ceux préalablement décrits en relation avec la figure 11.

### Numéros de référence employés sur les figures

### Bassin

- 1: Système de traitement de parois internes de bassins aquatiques
- 2: Bassin aquatique
- 3: Paroi à traiter

### Tête ventouse dynamique

- 10: Tête ventouse dynamique
- 11: Disque rotatif
- 12: Arbre de rotation
- 13: Moteur de disque
- 14: Couche d'interface de paroi
- 15: Rainures radiales
- 16: Orifice de circulation de fluide
- 17: Orifice de circulation de fluide dans l'axe de rotation creux
- 18: Enveloppe périphérique axiale
- 19: Paroi latérale circonférentielle
- 20: Lumière d'évacuation
- 21: Ressort
- 22: Palier (lisse ou roulement)
- 23: Orifices de couvercle
- 24: Couvercle

### Ensemble de mobilité

- 30: Ensemble de mobilité de tête de traitement
- 31: Rail vertical
- 32: Rail horizontal
- 33: Plateforme flottante
- 34: Galet
- 35: Moteur avec hélice
- 36: Treuil
- 37: Câble
- 40: Tête de maintien

- 50: Tête de travail indépendante

## Revendications

1. Système de traitement (1) de parois internes de bassins aquatiques (2), ledit système comportant au moins une
tête ventouse dynamique (10) et
un ensemble de mobilité (30) permettant de déplacer la tête ventouse dynamique le long d'une paroi (3) à traiter, la tête ventouse dynamique (10) comprenant un disque rotatif (11) agencé de façon rotative et relié à un axe (12) de rotation susceptible d'être entraîné par un moteur (13) de disque, le disque rotatif (11) portant une couche (14) d'interface de paroi,
dans lequel la couche (14) d'interface de paroi comprend une pluralité de rainures (15) radiales agencées dans la portion du disque (11) située du côté de la paroi à traiter et reliant le centre de rotation du disque à la périphérie du disque et au moins un orifice (16, 17) assurant, en fonctionnement dans un bassin aquatique à proximité immédiate d'une paroi (3) à traiter, un flux d'eau entre l'arrière du disque (11) et l'avant du disque, traversant le disque et s'acheminant ensuite par les rainures (15) radiales du disque de travail pour être éjecté latéralement puis rejeté dans l'eau du bassin, créant une aspiration entrainant le plaquage de la tête ventouse contre la paroi (3) à traiter.

2. Système de traitement selon la revendication 1, dans lequel le niveau de l'effet d'aspiration est ajustable en fonction de la vitesse de rotation du disque (11).

3. Système de traitement selon la revendication 1, dans lequel le niveau de l'effet d'aspiration est ajustable en fonction du nombre et des dimensions des rainures (15) radiales.

4. Système de traitement selon la revendication 1, dans lequel le niveau de l'effet d'aspiration est ajustable en fonction du diamètre du disque (11).

5. Système de traitement selon la revendication 1, dans lequel le disque comporte une mousse de frottement et la tête ventouse dynamique comporte une double fonction, soit une fonction de ventouse afin de fixer le système de traitement à une paroi de bassin à traiter et une fonction de nettoyage de la paroi à l'aide de la surface de traitement dans laquelle l'eau circule dans la mousse de frottement du disque, assurant son rinçage et emportant avec elle le biofilm et autres salissures retirées de la paroi.

6. Système de traitement selon la revendication 1, dans lequel le ou les orifices (16) sont disposés sur le pourtour de l'axe (12) de rotation.

7. Système de traitement selon la revendication 1, dans lequel l'axe (12) de rotation comporte un orifice (17) traversant.

8. Système de traitement selon la revendication 1, dans lequel la tête ventouse dynamique (10) comprend une enveloppe périphérique (18) axiale, comportant une paroi latérale circonférentielle (19), agencée de façon à entourer le disque rotatif (11), une lumière (20) d'évacuation étant agencée à travers la paroi latérale (19) de l'enveloppe périphérique (18) axiale.

9. Système de traitement selon l'une quelconque des revendications 1 à 6, dans lequel la tête ventouse dynamique sert uniquement à fixer le système de traitement à une paroi de bassin à traiter.

10. Système de traitement selon la revendication 9, comprenant par ailleurs au moins une tête de traitement de paroi, distincte de la tête ventouse dynamique, conçue pour effectuer un traitement de polissage ou de nettoyage d'au moins une paroi du bassin.

## Patentansprüche

1. Behandlungssystem (1) von Innenwänden von Wasserbecken (2), wobei das System mindestens einen
dynamischen Saugkopf (10) und
eine Mobilitätsbaugruppe (30) umfasst, die es erlaubt, den dynamischen Saugkopf entlang einer zu behandelnden Wand (3) zu verlagern, wobei der dynamische Saugkopf (10) eine Drehscheibe (11) umfasst, die drehend eingerichtet und mit einer Rotationsachse (12) verbunden ist, die von einem Taumelscheibenmotor (13) angetrieben werden kann, wobei die drehende Scheibe (11) eine Wandgrenzflächenschicht (14) trägt,
wobei die Wandgrenzflächenschicht (14) eine Vielzahl radialer Nuten (15) umfasst, die in dem Abschnitt der Scheibe (11), der auf der Seite der zu behandelnden Wand liegt und die Rotationsmitte der Scheibe mit dem Umfang der Scheibe verbindet, eingerichtet ist, und mindestens eine Öffnung (16, 17), die im Betrieb in einem Wasserbecken in unmittelbarer Nähe einer zu behandelnden Wand (3) einen Wasserfluss zwischen der Rückseite der Scheibe (11) und der Vorderseite der Scheibe sicherstellt, der die Scheibe durchquert und sich danach durch die radialen Nuten (15) der Arbeitsscheibe weiterbewegt, um seitlich ausgestoßen und dann in das Wasser des Beckens abgeleitet zu werden, indem eine Ansaugung geschaffen wird, die das Andrücken des Saugkopfs gegen die zu behandelnde Wand (3) bewirkt.

2. Behandlungssystem nach Anspruch 1, wobei das Niveau der Ansaugwirkung in Abhängigkeit von der Drehzahl der Scheibe (11) einstellbar ist.

3. Behandlungssystem nach Anspruch 1, wobei das Niveau der Ansaugwirkung in Abhängigkeit von der Anzahl und den Maßen der radialen Nuten (15) einstellbar ist.

4. Behandlungssystem nach Anspruch 1, wobei das Niveau der Ansaugwirkung in Abhängigkeit von dem Durchmesser der Scheibe (11) einstellbar ist.

5. Behandlungssystem nach Anspruch 1, wobei die Scheibe einen Reibungsschaumstoff umfasst und der dynamische Saugkopf eine doppelte Funktion umfasst, nämlich eine Saugnapffunktion, um das Behandlungssystem an einer zu behandelnden Beckenwand zu befestigen, und eine Reinigungsfunktion der Wand mit Hilfe der Behandlungsoberfläche, in der Wasser in dem Reibungssschaumstoff der Scheibe zirkuliert, indem ihr Spülen sichergestellt und mit ihr der Biofilm und andere Verschmutzungen, die von der Wand entfernt werden, weggetragen werden.

6. Behandlungssystem nach Anspruch 1, wobei die Öffnung oder Öffnungen (16) auf dem äußeren Umfang der Rotationsachse (12) angeordnet sind.

7. Behandlungssystem nach Anspruch 1, wobei die Rotationsachse (12) eine durchgehende Öffnung (17) umfasst.

8. Behandlungssystem nach Anspruch 1, wobei der dynamische Saugkopf (10) eine axiale Umfangshülle (18) umfasst, eine umlaufende Seitenwand (19) umfasst, die derart eingerichtet ist, dass sie die Rotationsscheibe (11) umgibt, wobei ein Abführlumen (20) durch die Seitenwand (19) des umlaufenden axialen Mantels (18) hindurch eingerichtet ist.

9. Behandlungssystem nach einem der Ansprüche 1 bis 6, wobei der dynamische Saugkopf nur dazu dient, das Behandlungssystem an einer zu behandelnden Beckenwand zu befestigen.

10. Behandlungssystem nach Anspruch 9, das außerdem mindestens einen Wandbehandlungskopf, der von dem dynamischen Saugkopf getrennt ist, umfasst, der dazu konzipiert ist, eine Polier- und Reinigungsbehandlung mindestens einer Wand des Beckens durchzuführen.

## Claims

1. Treatment system (1) for internal walls of aquatic tanks (2), said system comprising at least one dynamic suction head (10) and a mobility assembly (30) for moving the dynamic suction head along a wall (3) being treated, the dynamic suction head (10) comprising a rotary disk (11) disposed to rotate and connected to a rotation shaft (12) able to be driven by a disk motor (13), the rotary disk (11) bearing a wall interface layer (14), in which the wall interface layer (14) comprises a plurality of radial grooves (15) disposed in the portion of the disk (11) located on the side of the wall being treated and connecting the center of rotation of the disk to the edge of the disk and at least one orifice (16, 17) providing, when functioning in an aquatic tank in the immediate proximity of a wall (3) being treated, a flow of water between the rear of the disk (11) and the front of the disk, passing through the disk and thence being conveyed by the radial grooves (15) of the work disk to be discharge laterally then ejected into the water of the tank, creating suction resulting in the suction head being flattened against the wall (3) being treated.

2. Treatment system according to claim 1 wherein the level of the suction effect can be adjusted as a function of the rotation speed of the disk (11).

3. Treatment system according to claim 1 wherein the level of the suction effect can be adjusted as a function of the number and dimensions of the radial grooves (15).

4. Treatment system according to claim 1 wherein the level of the suction effect can be adjusted as a function of the diameter of the disk (11).

5. Treatment system according to claim 1, wherein the disk comprises a foam pad and the dynamic suction head comprises a dual function, namely a suction function to fix the treatment system to a wall of the tank being treated and a wall cleaning function using the treatment surface in which water circulates in the foam pad of the disk, rinsing it and carrying away with it the biofilm and other dirt removed from the wall.

6. Treatment system according to claim 1 wherein the orifice(s) (16) are disposed around the rotation shaft (12).

7. Treatment system according to claim 1 wherein the rotation shaft (12) comprises a transverse orifice (17).

8. Treatment system according to claim 1 wherein the dynamic suction head (10) comprises an axial peripheral envelope (18) comprising a circumferential side wall (19) arranged so as to surround the rotary disk (11), a discharge port (20) being disposed through the side wall (19) of the axial peripheral envelope (18).

9. Treatment system according to any one of claims 1 to 6 wherein the dynamic suction head is used only to fix the treatment system to a wall of the tank being treated.

10. Treatment system according to claim 9, further comprising at least one wall treatment head, distinct from the dynamic suction head, designed to polish or clean at least one wall of the tank.
